Europäisches Patentamt

European Patent Office

Office européen des brevets

(11) Veröffentlichungsnummer: **0 569 724 B1**

(12) **EUROPÄISCHE PATENTSCHRIFT**

(45) Veröffentlichungstag der Patentschrift: **02.08.95**

(51) Int. Cl.6: **C09C 1/00**

(21) Anmeldenummer: **93106117.0**

(22) Anmeldetag: **15.04.93**

(54) **Neutralblaue Zirkon-Vanadium-Pigmente.**

(30) Priorität: **15.05.92 DE 4216174**

(43) Veröffentlichungstag der Anmeldung:
**18.11.93 Patentblatt 93/46**

(45) Bekanntmachung des Hinweises auf die
Patenterteilung:
**02.08.95 Patentblatt 95/31**

(84) Benannte Vertragsstaaten:
**DE ES FR GB IT NL PT**

(56) Entgegenhaltungen:
**US-A- 2 441 447**
**US-A- 3 573 080**
**US-A- 4 047 970**

(73) Patentinhaber: **DEGUSSA AG**
**Weissfrauenstrasse 9**
**D-60311 Frankfurt (DE)**

(72) Erfinder: **Speer, Dietrich, Dr.**
**Grünaustrasse 7**
**W-6450 Hanau 9 (DE)**
Erfinder: **Kiss, Akos, Dr.**
**Greifenhagenstrasse 10a**
**W-6450 Hanau 9 (DE)**
Erfinder: **Horst, Jenny**
**Feldstrasse 20**
**W-6450 Hanau 8 (DE)**

## Beschreibung

Die Erfindung richtet sich auf neutralblaue Zirkon-Vanadium-Pigmente, welche sich gegenüber gattungsgemäßen vorbekannten Pigmenten durch deutlich verbesserte Farbwerte im CIE-L*a*b*-Farbsystem auszeichnen. Ein weiterer Gegenstand der Erfindung betrifft ein Verfahren zur Herstellung der neutralblauen Zirkon-Vanadium-Pigmente.

Glasurstabile Farbpigmente auf der Basis von mit Vanadium dotiertem Zirkoniumsilikat sind lange bekannt - US-PS 2,441,447. Derartige Farbkörper, häufig als Zirkon-Vanadin-Blau bezeichnet, werden durch Glühen eines Gemischs aus Zirkonium-, Silicium- und Vanadiumverbindungen, welche zur Bildung von $ZrO_2$, $SiO_2$ bzw. $V_2O_5$ befähigt sind, hergestellt; das bei 650 bis 1200 °C zu glühende Pulvergemisch enthält in der Regel einen oder mehrere Mineralisatoren aus der Reihe der Alkalimetalloxide, Hydroxide, Carbonate und Fluoride. Die Farbwerte, gemessen im CIE-L*a*b*-Farbsystem nach DIN 5033 (siehe Teil 3, 01/80) anhand einer 5 gew.-%igen Einfärbung in einer Transparentglasur, liegen bei unter günstigsten Bedingungen hergestellten Pigmenten im Bereich von L* = 37 bis 45, a* = -5 bis -12 und b* = -25 bis -35. Auch wenn in der Literatur nur von Zirkon-Vanadin-Blau die Rede ist, darf nicht übersehen werden, daß es sich hier um einen türkisblauen Farbkörper, also einen solchen mit relativ großem Grünanteil - gekennzeichnet durch den stark negativen a*-Wert - handelt. Ein neutrales Blau, das durch einen a*-Wert um 0, einen b*-Wert von negativer als -20 und einen L*-Wert von kleiner 50 gekennzeichnet ist, konnte auch bei Variation der Herstellbedingungen im Rahmen der Offenbarung der US-PS 2,441,447 nicht erhalten werden. An sogenannten Eckfarbkörpern, hier also einem neutralblauen Pigment mit einem a*-Wert nahe 0, besteht ein großes Interesse, weil sich derartige Farbkörper gut zur Herstellung von Pigmentmischungen zur gezielten Einstellung ganz bestimmter Farborte eignen und damit bei Bedarf kobalthaltige Farbkörper ersetzen können.

Aus der GB-PS 1 447 276 sind grünlich-blaue bis blau-violette oder grau-violette Farbkörper auf der Basis von mit Vanadium dotiertem Zirkoniumsilikat bekannt. Die Farbverschiebung von dem bekannten grünlich-blau zu einem mehr rötlichen Ton wird in dem in diesem Dokument beschriebenen Verfahren dadurch erzielt, daß das zu glühende Gemisch zusätzlich eine kleine Menge eines anorganischen Phosphats oder eines organischen Phorphorsäureesters enthält; als Quelle für $ZrO_2$ und $SiO_2$ wird hier ausschließlich thermisch dissoziiertes Zirkoniumsilikat verwendet. Es wurde festgestellt, daß die nach diesem Verfahren erhaltenen neutralblauen oder leicht rötlich getönten Blau-Farbkörper im Zirkoniumsiliat-Wirtsgitter außer Vanadium auch Phosphor enthalten. Die gemäß der GB-PS 1 447 276 hergestellten neutralblauen, d. h. phosphorhaltigen Zirkon-Vanadium-Pigmente sind gekennzeichnet durch eine geringe Farbintensität - L*-Wert um oder über 60 - und eine ungenügende Farbsättigung, welche besonders durch niedrige b*-Werte von -5 bis -19 bedingt ist.

Ein weiterer Nachteil der nach dem Verfahren der GB-PS 1 447 276 hergestellten neutralblauen Pigmente besteht darin, daß sich diese nicht in reproduzierbarer Qualität, d. h. mit geringen Farbabständen, gemessen nach der CIELAB-Formel gemäß DIN 6174 (01/1979), herstellen lassen. Dieser Nachteil überrascht zunächst, weil von thermisch dissoziiertem Zirkoniumsilikat besonders günstige Voraussetzungen für die Bildung von Wirtsgitterpigmenten erwartet wurden, da hier ein besonders inniges Gemisch der beiden Komponenten $SiO_2$ und $ZrO_2$ vorliegt. Eine der Ursachen für diesen Nachteil wird in dem gegebenenfalls wechselnden Gehalt an undissoziiertem Zirkoniumsilikat im thermisch dissoziierten Zirkoniumsilikat vermutet: Durch thermisch undissoziiertes Zirkoniumsilikat wird offensichtlich die Neubildung von $ZrSiO_4$ aus $SiO_2$ und $ZrO_2$ angeimpft, so daß die erforderliche Dotierung mit Vanadium und Phosphor ungenügend bleibt, wodurch es zu einer Minderung der Farbintensität kommt.

Aufgabe der vorliegenden Erfindung war somit, neutralblaue Zirkon-Vanadium-Pigmente zur Verfügung zu stellen, welche nicht nur neutralblau sind, d. h. einen a*-Wert um 0 aufweisen, sondern gleichzeitig gegenüber vorbekannten Pigmenten durch eine höhere Farbintensität (niedriger L*-Wert) und eine höhere Farbsättigung (insbesondere durch größeren negativen b*-Wert) gekennzeichnet sind. Der Farbsättigungsanteil eines Farborts ist gegeben durch $C_{ab}^* = (a^{*2} + b^{*2})^{1/2}$. Ein weiteres Ziel der Erfindung richtet sich auf die Herstellung der neutralblauen Pigmente: Das Verfahren sollte sicher reproduzierbar sein, d. h. der nach der CIELAB-Formel (DIN 6174) ermittelte Farbabstand sollte im Bereich handelsüblicher Toleranzen liegen ($\Delta E_{ab}^* = 0$-2).

Gefunden wurden neutralblaue Zirkon-Vanadium-Pigmente, deren Zirkon-Wirtsgitter außer mit Vanadium auch mit Phosphor dotiert ist, welche dadurch gekennzeichnet sind, daß sie in 5 gew.-%iger Einfärbung in einer Transparentglasur die Farbwerte L* = 35 bis kleiner 50, a* = 0 bis 4 und b* = -25 bis -35, gemessen im CIE-L*a*b*-Farbsystem nach DIN 5033, aufweisen. Der L*-Wert liegt meist zwischen 40 und kleiner 50.

Die Zusammensetzung bevorzugter Farbkörper entspricht etwa der Formel

$$Zr(Si_{0,97-0,98}\ V_{0,01-0,02}\ P_{0,005-0,01})O_4 .$$

Das Verfahren zur Herstellung der erfindungsgemäßen neutralblauen Zirkon-Vanadium-Pigmente ist dadurch gekennzeichnet, daß ein zirkonfreies Pulvergemisch aus im wesentlichen pulverförmigem Zirkoniumdioxid, einer Quelle für Siliziumdioxid aus der Reihe natürlicher oder synthetischer Kieselsäuren und Zeolithe, mindestens einer Vanadiumverbindung aus der Reihe der Vanadiumoxide und Vanadate, mindestens einer während des Verfahrens in ein Phosphat überführbaren anorganischen oder organischen Phosphorverbindung und mindestens einem Mineralisator auf Fluoridbasis, wobei im Pulvergemisch das Atomverhältnis Zirkonium zu Silizium zu Vanadium zu Phosphor im Bereich von 1 zu (0,95-1,10) zu (0,05-0,20) zu (0,005-0,03) liegt, mittels einer Mahlung in einer Intensivmühle homogenisiert und dann 1 bis 5 Stunden bei 700 °C bis 900 °C geglüht wird.

Im erfindungsgemäßen Verfahren enthält das zu glühende Pulvergemisch zur Bildung des Zirkonsilikat-Wirtsgitters pulverförmiges Zirkoniumdioxid und eine Quelle für Siliciumdioxid, welche vorzugsweise im wesentlichen aus $SiO_2$ besteht. Es war überraschend, daß durch die Verwendung der genannten Rohstoffe in Verbindung mit der für die Dotierung erforderlichen Vanadium- und Phosphorverbindung neutralblaue Pigmente mit höherer Farbintensität und Farbsättigung in sicher reproduzierbarer Form hergestellt werden können als im Falle der Verwendung des thermisch dissoziierten Zirkoniumsilikats gemäß der GB-PS 1 447 276. Der Erfolg ist auch deshalb überraschend, weil in der Publikation Nr. 59, 2/83 der Firma Th. Goldschmidt auf Seite 13 die Lehre vermittelt wird, wonach Phosphate in einem Pulvergemisch, enthaltend $ZrO_2$, $SiO_2$, $V_2O_5$ und einen Mineralisator, den Einbau des Vanadiums verhindern und nur braune Farbkörper entstehen lassen. Demgegenüber ist es bei Einhaltung des anspruchgemäßen Atomverhältnisses Zr zu Si zu V zu P möglich, die erfindungsgemäßen Pigmente zu erhalten.

Bei Verwendung von Quarzpulver oder synthetisch hergestellter Kieselsäure als $SiO_2$-Quelle weist das zu verwendende Zirkoniumdioxid zweckmäßigerweise einen mittleren Teilchendurchmesser ($d_{50}$-Wert) im Bereich von 2 bis 9 $\mu$m, vorzugsweise 2 bis 5 $\mu$m, auf.

Zum Zwecke der Dotierung des Wirtsgitters mit Phosphor können unterschiedliche Phosphorverbindungen in das Pulvergemisch eingebracht werden: Im Prinzip sind alle Phosphorverbindungen geeignet, welche während des Aufheizens und/oder der Glühung des Pulvergemischs zu einem Phosphat reagieren können. Unter den anorganischen Phosphorverbindungen sind die Phosphor-Sauerstoff-Säuren sowie deren Salze hervorzuheben, beispielsweise Phosphorsäure, Pyrophosphorsäure, Polyphosphorsäure sowie Alkali- und Ammoniumsalze dieser Säuren. Auch organische Phosphorverbindungen, welche mindestens eine P-O-Bindung aufweisen, beispielsweise Phosphorsäureester und Phosphonsäuren sowie deren Salze, sind geeignet. Die in fester oder flüssiger Form vorliegenden Phosphorverbindungen können als solche dem Pulvergemisch zugegeben werden. Zum Zwecke einer guten Verteilung ist es vorteilhaft, die Phosphorverbindung in flüssiger Form, worunter auch wäßrige Lösungen zu verstehen sind, einzusetzen.

Als Vanadiumverbindung können Vanadiumoxide, insbesondere $V_2O_5$, und Vanadate, insbesondere Alkali- und Ammoniumvanadate, eingesetzt werden.

Die Anwesenheit von Mineralisatoren auf Fluoridbasis ist für die Farbkörperbildung zwingend erforderlich. Geeignet sind insbesondere Fluoride der Alkali- und Erdalkalimetalle sowie Alkalisilikofluoride. Natriumfluorid wird gegenüber Lithium- und Kaliumfluorid bevorzugt. Außer einem Mineralisator auf Fluoridbasis können zusätzlich andere bekannte Mineralisatoren, wie beispielsweise Chloride, Hydroxide und Carbonate der Alkalimetalle, anwesend sein, sofern hierdurch der Farbort nicht nachteilig beeinflußt wird. Die optimale Menge an Mineralisatoren wird der Fachmann durch einen orientierenden Vorversuch bestimmen. In der Regel bewegt sich die Menge an Mineralisatoren im Bereich zwischen 1 und 6 Gew.-%, insbesondere 3 bis 5 Gew.-%, bezogen auf das Pulvergemisch.

Der Hinweis, wonach das Pulvergemisch "im wesentlichen" aus den vorstehend erörterten Komponenten besteht, ist so zu verstehen, daß außer dem oben erwähnten Wasser zusätzlich andere Verarbeitungshilfsmittel, wie z. B. Silikonöle als Mahlhilfsmittel, in kleiner Menge, im allgemeinen unter 5 Gew.-%, vorzugsweise unter 2 Gew.-%, bezogen auf das Pulvergemisch, zugegen sein können.

Ein erfindungswesentliches Merkmal im Rahmen der Herstellung der neutralblauen Zirkon-Vanadium-Pigmente besteht darin, daß das Pulvergemisch vor der Glühung intensiv gemahlen wird. Während des Mahlprozesses werden hohe Scherkräfte wirksam, wodurch sowohl eine gute Homogenisierung als auch eine mechanische Aktivierung - Hervorrufung von Kristallbaufehlern durch Reibung, Schlag, Druck und Scherung - bewirkt wird. Geeignete Intensivmühlen sind beispielsweise Kugelmühlen, hochtourige Schlagmühlen und Schwingmühlen. Die Mahldauer richtet sich im wesentlichen nach dem verwendeten Mühlenaggregat, der Betriebsintensität desselben sowie nach dem Füllgrad. Der Fachmann wird die optimale Mahldauer durch orientierende Vorversuche ermitteln. Im Falle der Mahlung in einer Kugelmühle oder Schwingmühle werden bei einer Mahldauer im Bereich zwischen 30 und 60 Minuten gute Ergebnisse erzielt.

Das homogenisierte und mechanisch aktivierte Pulvergemisch wird bei einer Glühtemperatur im Bereich von 700 bis 900 °C, vorzugsweise 750 bis 850 °C, geglüht; die Glühdauer liegt im Bereich zwischen 1 und 5, vorzugsweise zwischen 2 und 5, Stunden. Die Glühung wird in für die genannten Temperaturen geeigneten üblichen Glühöfen, beispielsweise Elektrokammeröfen oder Tunnelöfen, durchgeführt. Das Pulvergemisch befindet sich bei der Glühung üblicherweise in Schamotte-Tiegeln; sofern erwünscht, kann das Pulvergemisch auch in kompaktierter Form der Glühung zugeführt werden.

Ein wesentlicher Vorteil des erfindungsgemäßen Verfahrens besteht in einer sicheren Reproduzierbarkeit: die Farbabstände aufeinanderfolgender Produktionschargen liegen unter $\Delta E^*_{ab}$ = 1,5. Die nach dem Verfahren zugänglichen Pigmente sind neutral und weisen die gewünschte höhere Farbintensität und höhere Farbsättigung auf.

**Vergleichsbeispiel 1**

Farbkörper unter Verwendung thermisch dissoziierten Zirkoniumsilikats: Das zu glühende Pulvergemisch bestand aus

90,7 g thermisch dissoziiertem Zirkoniumsilikat mit dem Kornspektrum $d_{10}$ = 0,8 $\mu$m, $d_{50}$ = 8,21 $\mu$m, $d_{90}$ = 20,44 $\mu$m (TZS-Charge V308, 1/7/91; hergestellt durch induktives Schmelzen von Zirkonsand und Abschrecken der Schmelze gemäß dem Verfahren der DE-Patentanmeldung P 41 06 536.0
5,0 g Vanadinpentoxid ($V_2O_5$)
3,1 g Natriumfluorid
1,2 g Trinatriumphosphat (wasserfrei).

Das Pulvergemisch wurde 20 Minuten in einer Kugelmühle (Füllgrad 60 %, Kugelzahl 4 Ø = 3 cm) behandelt und anschließend in Schamotte-Tiegeln geglüht - Aufheizrate 100 K/h, Glühtemperatur 780 °C, Haltezeit 2 Stunden. Das geglühte Produkt wurde in bekannter Weise in einer Kugelmühle naß aufgemahlen, wobei gleichzeitig wasserlösliche Bestandteile herausgelöst wurden.

Die L*a*b*-Werte des gemahlenen und getrockneten Pigments wurden in 5 gew.-%iger Einfärbung in einer Transparentglasur bestimmt. Zusammensetzung der Transparentglasur in Gew.-%: 50,64 % $SiO_2$, 9,96 % $B_2O_3$, 15,65 % PbO, 11,22 % $Al_2O_3$, 0,98 % $Na_2O$, 3,17 % $K_2O$, 8,05 % CaO, 0,14 % MgO, 0,05 % ZnO und 0,14 % $Fe_2O_3$. Die eingefärbte Testglasur wurde auf eine Testplatte aus Biskuitporzellan aufgetragen und bei 1060 °C 45 Minuten eingebrannt. Die L*a*b*-Werte, gemessen nach DIN 5033, betrugen
$L^*$ = 57,60
$a^*$ = -0,38

$b^*$ = -18,75.
Das Pigment weist eine geringe Farbkraft auf und ist schlecht deckend.

**Vergleichsbeispiel 2**

Ansatz, Aufbereitung und Glühung wie Vergleichsbeispiel 1, jedoch wurde die TZS-Charge V308, 3/7/91 mit $d_{10}$ = 0,7 $\mu$m, $d_{50}$ = 7,54 $\mu$m, $d_{90}$ = 18,97 $\mu$m eingesetzt.
Das erhaltene Glühgut ist rein weiß.

**Vergleichsbeispiel 3**

Ansatz, Aufbereitung und Glühung wie Vergleichsbeispiel 1, jedoch wurde die TZS-Charge Ch. 2/11/91 mit $d_{10}$ = 0,5 $\mu$m, $d_{50}$ = 6,04 $\mu$m, $d_{90}$ = 15,75 $\mu$m eingesetzt.
Farbwerte der Einfärbung: $L^*$ = 71,87, $a^*$ = 2,57, $b^*$ = -5,49.

Sieht man vom Vergleichsbeispiel 2 ab, wo überhaupt kein farbiges Produkt entstanden ist, beträgt aber der $\Delta E^*$-Wert (DIN 6174) zwischen 2 Chargen (Beispiele 1 und 3) ca. 19. Ein solcher Farbabstand ist intolerabel.

**Vergleichsbeispiel 4**

Daß eine mögliche Verunreinigung des zu glühenden Gemischs mit Zirkonkristallen tatsächlich zu höheren L*-Werten, negativen a*- und geringen b*-Werten führt, legt dieses Vergleichsbeispiel nahe:
Ansatz gemäß dem erfindungsgemäßen Beispiel 1 jedoch unter Zusatz von 2 g Zirkoniumsilikat.
Farbwerte: $L^*$ = 55,56, $a^*$ = -1,69, $b^*$ = -23,41.

**Beispiel 1**

Hergestellt wurde ein Pulvergemisch bestehend aus
60,61 g Zirkoniumdioxid mit einem $d_{50}$-Wert von 3,29 $\mu$m, $d_{10}$-Wert = 0,4 $\mu$m, $d_{90}$-Wert = 10,36 $\mu$m
30,15 g Quarzpulver $d_{50}$ = 13,13 $\mu$m, $d_{10}$ = 1,82 $\mu$m, $d_{90}$ = 38,50 $\mu$m
3,12 g Natriumfluorid
4,99 g Vanadinpentoxid ($V_2O_5$)
1,13 g Trinatriumphosphat (wasserfrei).

Das Pulvergemisch wurde in gleicher Weise wie im Vergleichsbeispiel 1 in der Kugelmühle behandelt und anschließend unter den gleichen Bedingungen geglüht, nachbehandelt und getestet.

Das Pigment ist durch die Farbwerte
$L^*$ = 49,08
$a^*$ = 3,7
$b^*$ = -27,05
gekennzeichnet.

Analyse:    0,41 Gew.-% V (bezogen auf Pigment)

0,14 Gew.-% P (bezogen auf Pigment)

**Beispiel 2**

Beispiel 1 wurde wiederholt, jedoch mit dem einzigen Unterschied, daß anstelle des Trinatriumphosphats 1-Hydroxyethan-1,1-diphosphonsäure eingesetzt wurde.

1,2 ml einer 60 gew.-%igen Lösung dieser Säure in Wasser (handelsübliche Lieferform) wurden mit 10 ml Wasser verdünnt, die erhaltene Lösung dem Pulvergemisch aus Zr-, Si- und V-Verbindung und Mineralisator zugesetzt und gemeinsam 20 Minuten in einer Kugelmühle vermahlen. Das erhaltene Gemisch wurde gemäß Beispiel 1 geglüht und danach naß aufgemahlen. Die Farbwerte der Testeinfärbung lauten

$L^* = 46,93$

$a^* = 1,21$

$b^* = -27,21$

Die gemäß den erfindungsgemäßen Beispielen erhaltenen Pigmente weisen gegenüber jenen der Vergleichsbeispielen einen deutlich niedrigeren $L^*$-Wert (=höhere Intensität) und einen negativeren $b^*$-Wert (=mehr Blauanteil) auf. Die $L^*a^*b^*$-Werte bei den Versuchsreproduktionen gemäß der Erfindung führen zu Farbabständen unter $\Delta E^*_{ab} = 2$.

**Patentansprüche**

1.  Neutralblaue Zirkon-Vanadium-Pigmente, deren Zirkon-Wirtsgitter außer mit Vanadium auch mit Phosphor dotiert ist,
    dadurch gekennzeichnet,
    daß sie in 5 gew.-%iger Einfärbung in einer Transparentglasur die Farbwerte $L^* = 35$ bis kleiner 50, $a^* = 0$ bis +4 und $b^* = -25$ bis -35 (CIE-$L^*a^*b^*$-Farbsystem nach DIN 5033) aufweisen.

2.  Verfahren zur Herstellung neutralblauer Zirkon-Vanadium-Pigmente des Anspruchs 1,
    dadurch gekennzeichnet,
    daß ein zirkonfreies Pulvergemisch aus im wesentlichen pulverförmigem Zirkoniumdioxid, einer Quelle für Siliziumdioxid aus der Reihe natürlicher oder synthetischer Kieselsäuren und Zeolithe, mindestens einer Vanadiumverbindung aus der Reihe der Vanadiumoxide und Vanadate, mindestens einer während des Verfahrens in ein Phosphat überführbaren anorganischen oder organischen Phosphorverbindung und mindestens einem Mineralisator auf Fluoridbasis, wobei im Pulvergemisch das Atomverhältnis Zirkonium zu Silizium zu Vanadium zu Phosphor im Bereich von 1 zu (0,95-1,10) zu (0,05-0,20) zu (0,005-0,03) liegt, mittels einer Mahlung in einer Intensivmühle homogenisiert und dann 1 bis 5 Stunden bei 700 °C bis 900 °C geglüht wird.

3.  Verfahren nach Anspruch 2,
    dadurch gekennzeichnet,
    daß ein Zirkoniumdioxid mit einem mittleren Teilchendurchmesser ($d_{50}$-Wert) im Bereich von 2 bis 9 $\mu$m eingesetzt wird.

4.  Verfahren nach Anspruch 2 oder 3,
    dadurch gekennzeichnet,
    daß eine flüssige und/oder in eine wäßrige Lösung überführte Phosphorverbindung, vorzugsweise eine Phosphorsäure oder ein Alkalisalz derselben oder eine Phosphonsäure oder Alkalisalz derselben, bei der Herstellung des Pulvergemischs eingesetzt wird.

5.  Verfahren nach einem oder mehreren der Ansprüche 2 bis 4,
    dadurch gekennzeichnet,
    daß die Mahlung in einer Kugel- oder Schwingmühle bei einer Laufzeit von vorzugsweise 30 bis 60 Minuten erfolgt.

6.  Verfahren nach einem oder mehreren der Ansprüche 2 bis 5,
    dadurch gekennzeichnet,
    daß als Mineralisatoren nur solche auf Fluoridbasis, vorzugsweise Alkalifluoride und insbesondere Natriumfluoride, eingesetzt werden.

**Claims**

1.  Neutral blue zircon/vanadium pigments, the zircon matrix lattice of which is doped with phosphorus as well as with vanadium,
    characterised in that
    in a 5 wt.% colouring preparation in a transparent glaze they have the colour values $L^* = 35$ to less than 50, $a^* = 0$ to +4 and $b^* = -25$ to -35 (CIE-$L^*a^*b^*$ colour system to DIN 5033).

2.  Process for the production of neutral blue zircon/vanadium pigments according to claim 1,
    characterised in that
    a powder mixture containing no zircon prepared from substantially pulverulent zirconium dioxide, a source of silicon dioxide from the range comprising natural or synthetic silicas and zeolites, at least one vanadium compound from the range comprising vanadium oxides and vanadates, at least one inorganic or organic phosphorus compound which may be transformed into a phosphate during the process and at least one fluoride-based mineraliser, wherein the atomic ratio of zirconium to silicon to vanadium to phosphorus in the powder mixture is in the range from 1 : (0.95-1.10) : (0.05-0.20) : (0.005-0.03), is homogenised by grinding in an intensive mill and then calcined for 1 to 5 hours at 700°C to 900°C.

3. Process according to claim 2,
characterised in that
a zirconium dioxide with an average particle diameter ($d_{50}$ value) in the range from 2 to 9 $\mu$m is used.

4. Process according to claim 2 or 3,
characterised in that
a phosphorus compound which is liquid and/or has been converted into an aqueous solution, preferably a phosphoric acid or an alkali-metal salt thereof or a phosphonic acid or alkali-metal salt thereof, is used during production of the powder mixture.

5. Process according to one or more of claims 2 to 4,
characterised in that
grinding proceeds in a ball or vibrating mill at a running time of preferably 30 to 60 minutes.

6. Process according to one or more of claims 2 to 5,
characterized in that
the mineralisers used are only those based on fluoride, preferably alkali-metal fluorides and in particular sodium fluorides.

**Revendications**

1. Pigments bleu-neutre zirconium-vanadium, dont le réseau hôte de zirconium est dopé en dehors du vanadium aussi avec du phosphore, caractérisés en ce qu'ils possèdent dans une mise en couleur de 5 % en poids dans un glaçure transparent, les valeurs de coloration L* = 35 jusqu'à plus petit que 50, a* = 0 jusqu'à +4 et b* = -25 jusqu'à -35 (système de couleurs CIE-L*a*b* selon la norme DIN 5033).

2. Procédé de production de pigments bleu-neutre zirconium-vanadium de la revendication 1, caractérisés en ce qu'un mélange de poudres dépourvu de zircon, formé essentiellement de dioxyde de zirconium pulvérulent, d'une source de dioxyde de silicium choisi dans la série des acides siliciques et des zéolites naturels et synthétiques, d'au moins un dérivé du vanadium choisi dans la série des oxydes de vanadium et des vanadates, d'au moins un dérivé du phosphore minéral ou organique, convertible pendant le processus en un phosphate, et d'au moins un agent de minéralisation à base de fluorure, dans lequel dans le mélange de poudres le rapport atomique du zirconium au silicium, au vanadium et au phosphore se situe dans la zone de 1 à (0,95-1,10) à (0,05-0,20) à (0,005-0,03) est homogénéisé à l'aide d'un broyage dans un broyeur intensif et en ce qu'ensuite, il est calciné pendant 1 à 5 heures de 700 à 900°C.

3. Procédé selon la revendication 2, caractérisé en ce que l'on met en oeuvre un dioxyde de zirconium ayant un diamètre moyen de particules (valeur $d_{50}$) dans la zone allant de 2 à 9 $\mu$m.

4. Procédé selon la revendication 2 ou la revendication 3, caractérisé en ce que l'on met en oeuvre, au cours de la production du mélange de poudres, un dérivé du phosphore liquide et/ou converti en une solution aqueuse, de préférence un acide phosphorique ou un sel de métal alcalin de celui-ci, ou un acide phosphonique ou un sel de métal alcalin de celui-ci.

5. Procédé selon l'une ou plusieurs des revendications 2 à 4, caractérisé en ce que le broyage s'effectue dans un broyeur à billes ou un broyeur vibrant pendant un laps de temps de préférence de 30 à 60 minutes.

6. Procédé selon l'une ou plusieurs des revendications 2 à 5 caractérisé en ce que l'on met en oeuvre comme agents de minéralisation, seulement ceux à base de fluorure, de préférence des fluorures de métal alcalin et, en particulier, des fluorures de sodium.